Europäisches Patentamt

European Patent Office

Office européen des brevets

(19)

(11) Veröffentlichungsnummer: **0 155 554**
**B1**

(12) **EUROPÄISCHE PATENTSCHRIFT**

(45) Veröffentlichungstag der Patentschrift:
**24.05.89**

(51) Int. Cl.⁴: **B 60 J 1/00**

(21) Anmeldenummer: **85102156.8**

(22) Anmeldetag: **27.02.85**

(54) **Positioniervorrichtung für Kraftfahrzeugscheiben.**

(30) Priorität: **23.03.84 DE 3410679**

(43) Veröffentlichungstag der Anmeldung:
**25.09.85 Patentblatt 85/39**

(45) Bekanntmachung des Hinweises auf die Patenterteilung:
**24.05.89 Patentblatt 89/21**

(84) Benannte Vertragsstaaten:
**DE FR GB IT SE**

(56) Entgegenhaltungen:
**DE-A- 1 951 390**
**DE-A- 3 243 101**
**FR-A- 1 132 649**
**US-A- 3 851 433**

(73) Patentinhaber: **Adam Opel Aktiengesellschaft,**
**Bahnhofsplatz 1 Postfach 1560, D-6090 Rüsselsheim**
**(DE)**

(72) Erfinder: **Schulmeyer, Jürgen, Jahnstrasse 3 a,**
**D-6087 Büttelborn (DE)**

(74) Vertreter: **Rosenfeld, Jürgen, Dipl. Ing. et al, Adam Opel**
**Ag Patentabteilung Bahnhofsplatz 1 Postfach 17 10,**
**D-6090 Rüsselsheim (DE)**

## Beschreibung

Die Erfindung betrifft eine Positioniervorrichtung für Kraftfahrzeugscheiben, insbesondere Windschutz- oder Heckscheiben, welche am unteren Scheibenrand anliegende, an Karosserieteilen befestigte, verstellbare Halteelemente hat (siehe z.B. DE-C-27 23 255).

Eine Positioniervorrichtung dieser Art ist beispielsweise in der deutschen Patentanmeldung DE-A-32 43 101 beschrieben. Als Halteelemente dienen bei der als Stand der Technik geltenden Positioniervorrichtung Exzenter. Diese sind mit einem Spezialwerkzeug zu verdrehen und schieben dabei die Scheibe in die gegenüberliegenden Halteprofile. Hat die Scheibe ihre richtige Position erreicht, dann werden die Exzenter durch jeweils einen Stift in ihrer Lage fixiert.

Die Montage einer Scheibe mit solchen Halteelementen erfordert die Verwendung mehrerer Werkzeuge und bedingt einen beträchtlichen Zeitaufwand, da zahlreiche Arbeitsgänge hintereinander durchgeführt werden müssen. Der Kleber, mit dem die Scheibe am Karosserieblech befestigt wird, darf während dieser Arbeiten noch nicht abbinden.

Bekannt ist gemäß DE-C-27 23 255 auch ein Verfahren zur Befestigung einer Kraftfahrzeugscheibe, bei der die Scheibe unter Ausnutzung ihrer Konizität entlang der Seitenholme und bis zur Endstellung am Dachholmen eingeschoben wird. Der untere Scheibenflansch wird dann auf dem zugeordneten Karosserieblech befestigt.

Bei dieser Art der Befestigung werden Fertigungstoleranzen durch die Keilwirkung der konischen Scheibe ausgeglichen. Erforderlich ist ein erheblicher Platzbedarf unterhalb der Scheibe (a ~ 50 mm).

Der Erfindung liegt die Aufgabe zugrunde, eine Positioniervorrichtung der eingangs genannten Art derart zu gestalten, daß ein Positionieren einer Scheibe von Hand ohne Verwendung von Werkzeug oder großen Platzbedarf unterhalb der Scheibe sehr rasch durchzuführen ist.

Diese Aufgabe wird erfindungsgemäß durch die im Anspruch 1 enthaltenen Merkmale gelöst, daß die Halteelemente Justierplatten sind, welche jeweils eine Auflagefläche und einen über den Scheibenrand greifenden Vorsprung und eine schräg zum Scheibenrand verlaufende Führungsnut haben, in die jeweils ein ortsfester Haltebolzen der Karosserie greift.

Bei einer solchen Positioniervorrichtung wird die Scheibe einfach von Hand auf die die Fensteröffnung begrenzenden Karosserieteile und damit auch auf die dort angebrachten Justierplatten gelegt. Anschließend können die Justierplatten auf Grund ihrer schräg verlaufenden Führungsnuten mit relativ wenig Kraft nach rechts oder links verschoben werden, bis daß die Scheibe ihre genau richtige Position hat. Es ist dann nur noch kurz abzuwarten, bis der Kleber abgebunden hat.

Wichtig für die Erfindung ist, daß die Justierplatten verschiebbar am Fensterrahmen gehalten sind. Das ist besonders leicht und einfach zu verwirklichen, wenn die Führungsnut T-förmigen Querschnitt hat und der Haltebolzen mit einem Kopf in den erweiterten Nutbereich greift. Die Justierplatten können bei dieser Ausführungsform nicht von selbst von der Karosserie herunterfallen, bevor die Scheibe montiert ist.

Günstig ist es auch, wenn die Führungsnut zu einer Schmalseite der Justierplatte hin offen ist. Die Justierplatten können dann einfach von einer Seite her auf die Haltebolzen geschoben werden.

Die Erfindung läßt zahlreiche Ausführungsmöglichkeiten zu. Zur Verdeutlichung ihres Grundprinzips ist eine davon in der Zeichnung dargestellt und wird nachfolgend beschrieben. Es zeigen:

Fig. 1 die Heckpartie eines Personenkraftfahrzeuges in Draufsicht auf die Heckscheibe mit der erfindungsgemäßen Positioniervorrichtung,

Fig. 2 einen Schnitt entlang der Linie II–II in Figur 1 in perspektivischer Darstellung,

Fig. 3 eine Draufsicht auf ein Halteelement der erfindungsgemäßen Positioniervorrichtung gemäß Figur 2.

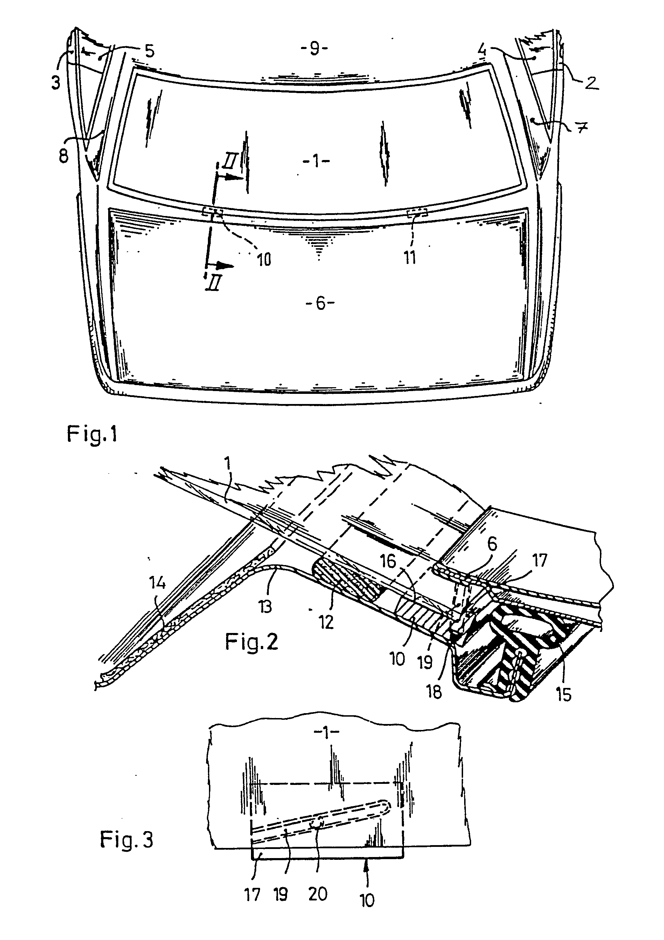

In Figur 1 ist eine Heckscheibe 1 dargestellt. Teilweise zu erkennen sind Türen 2, 3 mit Seitenfenstern 4, 5. Mit 6 ist ein bis zur Heckscheibe reichender Kofferraumdeckel bezeichnet. Die Heckscheibe 1 reicht seitlich bis an Dachholme 7, 8 und nach oben hin bis zum Fahrzeugdach 9. Die Befestigung der Heckscheibe 1 soll durch Kleben erfolgen. Zur genauen Positionierung der Scheibe vor dem Verkleben dienen zwei Halteelemente 10, 11, die zusammen eine Positioniervorrichtung bilden, und deren genaue Gestaltung Gegenstand der Erfindung ist.

Die Figur 2 läßt im Schnitt den unteren Bereich der Heckscheibe 1 erkennen. Diese ist durch eine Klebstoffschicht 12 mit einem Karosserieteil 13 fest verbunden, welches zum Fahrzeuginneren hin in eine Hutablage 14 übergeht. Ein schwarzer Farbrand auf der Heckscheibe 1 verdeckt die Klebstoffschicht 12 und die Halteelemente 10, 11. Nach hinten zu haltert das Karosserieteil 13 eine Dichtung 15, auf der der Kofferraumdeckel 6 aufliegt. Zu erkennen ist weiterhin das Halteelement 10. Man sieht, daß dieses Halteelement eine Justierfläche 16 hat, auf der die Heckscheibe 1 aufliegt. Mit einem Vorsprung 17 greift das Halteelement über die Unterkante der Heckscheibe 1. Zur Befestigung des Halteelementes 10 am Karosserieteil 13 ragt ein Haltebolzen 18 in eine Führungsnut 19 des Halteelementes 10. Diese Führungsnut 19 hat T-förmigen Querschnitt, so daß der Haltebolzen 18 mit einem Kopf 20 das Halteelement 10 derart zu fixieren vermag, daß es nicht vom Karosserieteil 13 herunterfallen, jedoch in Richtung seiner Führungsnut 19 verschoben werden kann.

Wie Figur 3 zeigt, verläuft die Führungsnut 19 von der in der Zeichnung gesehen linken Seite des Halteelementes 10 schräg weg von der Unterkante der Heckscheibe 1. Bei Montage der Heckscheibe 1 nehmen die Halteelemente 10, 11 zunächst eine mittlere Stellung ein, in der die Haltebolzen sich ungefähr in der Mitte der Führungsnut 19 befinden. Dann wird die Heckscheibe 1 auf die entsprechenden, mit der Klebstoffschicht 12 versehenen Karosserieteile gelegt. Die genaue Ausrichtung der Heckscheibe erfolgt anschließend dadurch, daß man die Halteelemente 10, 11 von Hand nach rechts oder links verschiebt. Ein Verschieben nach links führt dazu, daß sich die Scheibe nach unten verlagert, während ein Verschieben nach rechts ein Anheben der Heckscheibe 1 bewirkt. Die Steigung der Führungsnut 19 ist derart, daß eine Selbsthemmung eintritt. Die durch Verschieben der Halteelemente 10, 11 erreichte Stellung der Heckscheibe 1 bleibt deshalb erhalten, wenn man die Halteelemente 10, 11 losläßt.

### Patentansprüche

1. Positioniervorrichtung zur Befestigung einer Kraftfahrzeugscheibe (1), insbesondere Windschutz- oder Heckscheibe, in einer durch das Halteprofil der Seitenholme (7, 8) beidseitig der Scheibe (1) und des oberen Dachholmes (9) gebildeten Scheibenfassung, wobei die Scheibe über ein elastisches Abdichtprofil mit dem Halteprofil verbunden ist und durch zwei auf den unteren Scheibenrand einwirkende Halteelemente (10, 11) festgelegt ist und wobei der untere Bereich der Scheibe mit einem Kleber (12) an der Karosserie (13) befestigt ist, dadurch gekennzeichnet, daß die Halteelemente (10, 11) Justierplatten sind, welche jeweils eine Auflagefläche für den unteren Bereich der Scheibe, einen über den unteren Scheibenrand greifenden Vorsprung (17) und eine schräg zum unteren Scheibenrand verlaufende Führungsnut (19) haben, in die jeweils ein ortsfester Haltebolzen (18) der Karosserie (13) greift.

2. Positioniervorrichtung nach Anspruch 1, dadurch gekennzeichnet, daß die Führungsnut (19) T-förmigen Querschnitt hat und der Haltebolzen (18) mit einem Kopf (20) in den erweiterten Nutbereich greift.

3. Positioniervorrichtung nach Anspruch 1, dadurch gekennzeichnet, daß die Führungsnut (19) zu einer Schmalseite des Halteelementes (10, 11) hin offen ist.

### Claims

1. Positioning device for mounting a motor vehicle pane (1), in particular windscreen or rear window, in a window surround formed by the holding profile of the side pillars (7, 8) on both sides of the pane (1) and the upper roof member (9), wherein the pane is joined to the holding profile by a resilient sealing profile and fixed by two holding elements (10, 11) acting on the lower edge of the pane (1) and wherein the lower region of the pane is attached to the body (13) by a glue (12), characterised in that the holding elements (10, 11) are adjusting plates which each have a supporting surface for the lower region of the pane, a projection (17) overlapping the lower edge of the pane and a guide groove (19) which extends at an angle to the lower edge of the pane and in which engages a stationary holding pin (18) of the body (13).

2. Positioning device according to claim 1, characterised in that the guide groove (19) has a T-shaped cross-section and the holding pin (18) engages by a head (20) in the wider groove region.

3. Positioning device according to claim 1, characterised in that the guide groove (19) opens towards an edge of the holding element (10, 11).

### Revendications

1. Dispositif de positionnement pour fixer une vitre d'un véhicule automobile, notamment une vitre de pare-brise ou une vitre arrière, dans une monture de vitre constituée par le profilé de maintien des montants latéraux (7, 8) situés des deux côtés de la vitre (1) et par le profilé de maintien de la traverse de toit (9), la vitre étant assemblée au profilé de maintien par l'intermédiaire d'un profilé d'étanchéité élastique et étant immobilisée par deux éléments de maintien (10, 11) agissant sur le bord inférieur de la vitre, et la région inférieure de la vitre (1) étant fixée à la carrosserie (13) par un adhésif (12), caractérisé par le fait que les éléments de maintien (10, 11) sont des plaques d'ajustement qui possèdent chacune une surface pour l'appui de la région inférieure de la vitre, un saillant (17) débordant par-dessus le bord inférieur de la vitre, et une rainure de guidage (19) dirigée obliquement par rapport au bord inférieur de la vitre, rainure dans laquelle s'engage un doigt de maintien (18) fixe de la carrosserie (13).

2. Dispositif de positionnement selon revendication 1, caractérisé par le fait que la rainure de guidage (19) présente une section droite en forme de T et le doigt de maintien (18) s'engage par une tête (20) dans la région élargie de la rainure.

3. Dispositif de positionnement selon revendication 1, caractérisé par le fait que la rainure de guidage (19) est ouverte vers un côté étroit de l'élément de maintien (10, 11).

EP 0 155 554 B1

Fig.1

Fig.2

Fig.3